# EUROPÄISCHE PATENTSCHRIFT

(11) **EP 0 867 732 B1**
(45) Veröffentlichungstag und Bekanntmachung des Hinweises auf die Patenterteilung: **29.06.2005**
(21) Anmeldenummer: 98104399.5
(22) Anmeldetag: 11.03.1998
(51) Int. Cl.: G01V 8/20

(54) **Lichtgitter und Verfahren zu seiner Herstellung**
Light curtain and method for its manufacture
Grille de lumière et son procédé de fabrication

(30) Priorität: 26.03.1997 DE 19712828
(43) Veröffentlichungstag der Anmeldung: 30.09.1998
(73) Patentinhaber: Sick AG, 79183 Waldkirch, Breisgau (DE)
(72) Erfinder: Buitkamp, Hermann, 79112 Freiburg (DE); Hippenmeyer, Heinrich, 79384 Freiamt (DE)
(74) Vertreter: Pellkofer, Dieter Dr.

(56) Entgegenhaltungen:
- DE-A- 4 406 906
- US-A- 4 267 443
- US-A- 4 302 105
- US-A- 4 769 535

## Beschreibung

Die vorliegende Erfindung betrifft eine optische Anordnung nach dem Oberbegriff des Anspruchs 1. Weiterhin ist die Erfindung auf ein Lichtgitter mit zumindest einer optischen Anordnung mit Sendeelementen sowie zumindest einer optischen Anordnung mit Empfangselementen dieser Art sowie auf ein Verfahren zur Herstellung einer solchen optischen Anordnung gerichtet.

Optische Anordnungen, d.h. Sende- und Empfangsvorrichtungen sowie daraus gebildete Lichtgitter dieser Art werden beispielsweise bei sich selbsttätig schließenden Türen, wie beispielsweise Aufzugstüren, verwendet. Während früher seitlich der Türöffnung jeweils nur ein Sende- und ein Empfangselement vorgesehen waren, werden heute zunehmend aus Sicherheitsgründen eine Vielzahl von Sende- und Empfangselementen über die Bauhöhe der Türöffnung verteilt angeordnet. Auf diese Weise soll erreicht werden, daß zum einen auch schmale, in den innerhalb des Türrahmens gelegenen Erfassungsbereich eintretende Gegenstände, wie beispielsweise Stöcke, Finger oder Hundeleinen, und zum anderen möglichst über den gesamten Bereich der Türhöhe eintretende Gegenstände sicher erkannt werden.

Um für die Vielzahl von verschiedenen Bauhöhen der unterschiedlichen Türen jeweils ein optimal angepaßtes Lichtgitter erzeugen zu können, müssen eine Vielzahl von optischen Sende- und Empfangsvorrichtungen auf Lager gehalten werden oder es müssen diese Vorrichtungen für jede Tür individuell angefertigt werden. Dies führt zum einen zu hohen Lagerkosten und zum anderen zu hohen Produktionskosten, da die Produktion von Lichtgittern mit einer Vielzahl von unterschiedlichen Bauhöhen die für eine einzelne Bauhöhe hergestellte Stückzahl reduziert und somit praktisch einer individuellen Herstellung gleichkommt.

Aus der US-A-4,267,443 ist eine optische Anordnung mit einer Vielzahl von Sende- bzw. Empfangselementen sowie zugeordneten Linsen bekannt, wobei die Linsen in einer aus transparentem Kunststoff bestehenden Frontabdeckung ausgebildet sind. Sowohl die Frontabdeckung als auch die Leiterplatte sind als relativ dicke, starre Elemente ausgebildet.

Der vorliegenden Erfindung liegt die Aufgabe zugrunde, ein Lichtgitter der eingangs genannten Art sowie die für das Lichtgitter benötigten optischen Sende- und Empfangsvorrichtungen so auszubilden, daß eine sehr einfache und kostengünstige Herstellung dieser Bauelemente möglich ist und gleichzeitig die erzeugten Lichtgitter variabel für nahezu jede beliebige Bauhöhe eines Überwachungsbereichs verwendbar sind. Weiterhin soll ein Verfahren zur einfachen und kostengünstigen Herstellung der für ein erfindungsgemäß ausgebildetes Lichtgitter benötigten Einzelelemente angegeben werden.

Die die Vorrichtung betreffende Aufgabe wird erfindungsgemäß durch die Merkmale des Anspruchs 1 gelöst.

Ein erfindungsgemäß ausgebildetes Lichtgitter umfaßt zumindest jeweils eine dieser optischen Sende- und Empfangsvorrichtungen.

Der das Verfahren betreffende Teil der Aufgabe wird durch die Merkmale des Anspruchs 16 gelöst.

Erfindungsgemäß werden somit die wesentlichen Bestandteile des optischen Lichtgitters, nämlich die diffraktiven/refraktiven optischen Elemente sowie die die Sende- bzw. die Empfangselemente tragende Leiterplatte aus als "Meterware" vorgefertigten Elementen in der optimalen, benötigten Länge durch einfaches Abmessen und Abtrennen gebildet. Dabei wird durch die Ausbildung der diffraktiven/refraktiven optischen Elemente unmittelbar in der Frontabdeckung eine weitere Reduzierung der benötigten Elemente und damit eine weitere Kostenreduzierung erreicht. Darüber hinaus wird auf diese Weise ermöglicht, daß auch die ursprünglich separate Einzelteile darstellenden, diffraktiven/refraktiven optischen Elemente als "Meterware" vorbereitet werden können.

Ein weiterer Vorteil in der Zusammenfassung der Frontabdeckung und der diffraktiven/refraktiven optischen Elemente zu einem einheitlichen Bauteil liegt darin, daß eine gesonderte Linsenherstellung entfallen kann und die optischen Elemente auf der unbehandelten transparenten Frontabdeckung in einem kontinuierlichen Prozeß beispielsweise eingeprägt und somit in einem "Endlosverfahren" mit gleichbleibender Qualität preiswert hergestellt werden können.

Auch die Leiterplatte kann praktisch in einem kontinuierlichen Prozeß automatisch bestückt werden, wodurch die Qualität der automatischen Bestückung erhöht werden kann. Darüber hinaus sind keine Verbindungen einzelner Leiterplatten untereinander, beispielsweise über Steckverbindungen oder Lötungen erforderlich, wodurch die mit diesen Verbindung oftmals einhergehenden Probleme ebenfalls entfallen.

Auch der Test der bestückten Leiterplatten kann unmittelbar nach der Bestückung im selben Verfahrensschritt durchgeführt werden, wodurch die Kosten weiter reduziert und die Qualität gleichzeitig erhöht werden können. Das Abtrennen der einzelnen Elementabschnitte kann je nach verwendetem Material durch Schneiden, Brechen, Sägen oder dergleichen erfolgen.

Nach einer vorteilhaften Ausführungsform der Erfindung sind zwischen der die Sende- bzw. die Empfangselemente tragenden Leiterplatte und der die diffraktiven/refraktiven optischen Elemente bildenden Frontplatte eine Vielzahl von Blendenöffnungen vorgesehen, die in einer einheitlichen, einstückig ausgebildeten Blendenplatte ausgebildet sind. Diese Blendenplatte kann entsprechend der Herstellung der Leiterplatte bzw. der Frontabdeckung in einem Endlosverfahren hergestellt werden, so daß bei der Herstellung eines Lichtgitters der gewünschten Länge lediglich ein entsprechender Abschnitt des vorbereiteten Blendenplattenmaterials abgetrennt werden muß. Durch die Blendenplatte wird die Streuung zwischen nebeneinanderliegenden Sende- bzw. Empfangselementen verringert, wodurch die Ansprechgenauigkeit des Lichtgitters erhöht wird.

Bevorzugt sind die Mittenabstände zweier benachbarter diffraktiver/refraktiver optischer Elemente, zweier benachbarter Sendeelemente bzw. zweier benachbarter Empfangselemente und gegebenenfalls zweier benachbarter Blendenöffnungen im wesentlichen gleich groß. Durch diese Anordnung sowie der jeweils einstückigen Ausbildung der Frontabdeckung sowie der Leiterplatte und der Blendenplatte ist gewährleistet, daß durch einfache Justierung der die diffraktiven/refraktiven optischen Elemente tragenden Frontabdeckung bezüglich der jeweiligen Leiterplatte und gegebenenfalls der Blendenplatte in einem einmaligen Vorgang sämtliche Sende- bzw. Empfangselemente, mit sämtlichen diffraktiven/refraktiven optischen Elementen sowie gegebenenfalls sämtlichen Blendenöffnungen fluchtend ausgerichtet sind. Eine Justierung der Position einzelner Elemente ist somit nicht erforderlich.

Vorteilhaft sind die Größen der Blendenöffnungen variabel einstellbar, wodurch eine stufenlose Anpaßbarkeit an unterschiedliche Kundenwünsche erzielbar sein kann.

Nach einer weiteren vorteilhaften Ausführungsform der Erfindung ist die Blendenplatte flexibel, insbesondere als flexible Folie, ausgebildet. Auf diese Weise kann das Lichtgitter sehr individuell verlaufend ausgebildet werden, so daß es beispielsweise entlang einer vorgegebenen Krümmung angepaßt werden kann. Weiterhin kann die Herstellung flexibler Frontabdeckungen mit integrierten diffraktiven/refraktiven optischen Elementen bzw. die Herstellung flexibler Leiterplatten oder Blendenplatten im "Reel-to-Reel"-Verfahren hergestellt werden. Dabei werden die vorgefertigten Basismaterialien von einer Vorratsrolle abgewickelt, zum Einprägen der diffraktiven/refraktiven Elemente, zum Bestücken mit den Sende- bzw. Empfangselementen oder zum Erzeugen der Blendenöffnungen jeweils geeigneten Einrichtungen zugeführt und die derart vorbereiteten Zwischenprodukte auf eine weitere Vorratsrolle wieder aufgewickelt. Zur Herstellung eines Lichtgitters gewünschter Größe kann dann von dieser Vorratsrolle die gewünschte Länge des jeweiligen Zwischenproduktes abgewickelt und von dem restlichen, sich auf der Rolle befindlichen Material abgetrennt werden.

Die Leiterplatte und/oder die Frontabdeckung und/oder die Blendenplatte kann dabei jeweils so flexibel ausgebildet sein, daß sie in einer durch die optischen Achsen der Sende- bzw. Empfangselemente definierte Richtung und/oder in einer Richtung senkrecht dazu oder in einer beliebigen Richtung verbiegbar sind. Während eine Flexibilität in Richtung der optischen Achsen durch ein geeignetes dünnes flexibles Material erreicht werden kann, kann eine seitliche Flexibilität, d.h. eine Flexibilität senkrecht bzw. schräg zu den optischen Achsen beispielsweise dadurch erreicht werden, daß in den Bereichen zwischen den Linsen bzw. den Blendenöffnungen bzw. den Sende- bzw. den Empfangselementen insbesondere keilförmige seitlichen Ausnehmungen ausgebildet sind, die zu den seitlichen Rändern der Leiterplatte und/oder der Frontabdeckung und/oder der Blendenplatte insbesondere offen ausgebildet sind.

Nach einer weiteren bevorzugten Ausführungsform der Erfindung sind die Frontabdeckung und die Leiterplatte sowie gegebenenfalls die Blendenplatte gegeneinander unverschiebbar angeordnet, insbesondere miteinander verbunden. Dabei kann diese Verbindung über die Länge der einzelnen Elemente betrachtet an einzelnen Punkten oder über die gesamte Länge der Bauelemente geschehen. Da die Leiterplatte, die Frontabdeckung und gegebenenfalls die Blendenplatte flexibel ausgebildet sind, sind sie bevorzugt in einem gemeinsamen, insbesondere starr ausgebildeten Gehäuse angeordnet. Auf diese Weise erfolgt die Verbindung der flexiblen Elemente durch das gemeinsame Gehäuse, das den das Lichtgitter bildenden Sender- bzw. Empfängerleisten gleichzeitig die notwendige Stabilität gibt.

Nach einer weiteren vorteilhaften Ausführungsform der Erfindung ist das Gehäuse als U-förmige Profilschiene, insbesondere als Stranggußprofil ausgebildet, wobei insbesondere an den Innenseite der Schenkel der U-förmigen Profilschiene Führungsabschnitte, insbesondere Führungsleisten, zum Einführen und Halten der Frontabdeckung sowie gegebenenfalls weitere Führungsabschnitte, insbesondere weitere Führungsleisten, zum Einführen und Halten der Blendenplatte ausgebildet sind. Die Leiterplatte kann vorteilhaft unmittelbar am Boden der U-förmigen Profilschiene angeordnet und insbesondere an diesem befestigt sein. Die Befestigung sowohl der Leiterplatte als auch der Frontabdeckung bzw. der Blendenplatte kann beispielsweise durch Klebung, Verschraubung oder Bördelung mit dem Gehäuse erfolgen.

Vorteilhaft ist zwischen der die Sende- bzw. die Empfangselemente tragenden Leiterplatte und der die diffraktiven/refraktiven optischen Elemente bildenden Frontplatte eine Vielzahl von insbesondere zusammenhängenden Tuben vorgesehen. Durch sendeseitig vorgesehene Tuben kann ein seitliches Abstrahlen von Licht verhindert werden, während durch empfangsseitige Tuben seitlich einfallendes Streulicht absorbiert wird.

Die Tuben bilden bevorzugt ein insbesondere flexibles Zwischenelement, das aus einer kettenförmigen Aneinanderreihung von einzelnen Tuben besteht. Dabei kann das kettenförmige Zwischenelement sowohl im wesentlichen in Richtung der optischen Achsen der Sende- bzw. der Empfangselemente und/oder in einer Richtung im wesentlichen senkrecht zu den optischen Achsen der Sende- bzw. der Empfangselemente und/oder in beliebiger Richtung flexibel ausgebildet sein, so daß die gesamte, aus der Frontabdeckung, dem Zwischenelement und der Leiterplatte bestehende Anordnung eine hohe Flexibilität besitzt.

Nach einer weiteren vorteilhaften Ausführungsform besteht das Zwischenelement aus zwei in Längsrichtung getrennten Einheiten, wobei diese zum Erzeugung des Zwischenelements miteinander verbunden, insbesondere zusammengesteckt sind. Grundsätzlich kann das Zwischenelement auch aus mehr als zwei Einheiten bestehen, falls dies beispielsweise fertigungstechnisch weitere Vorteile bringt. Die Einheiten können auch miteinander verklebt, verschweißt oder auf sonstige Weise miteinander verbunden sein oder beispielsweise auch durch die Frontabdekkung, die Platine oder das Gehäuse zusammengehalten werden. Beispielsweise können die Außenkanten der Einheiten durch an den Rändern der Frontabdeckung ausgebildete Ansätze übergriffen werden.

Das Zwischenelement kann wie die Frontplatte, die Leiterbahn oder die Blendenplatte als Meterware vorbereitet sein, so daß durch Abtrennen eines entsprechenden Abschnittes ein Sende- bzw. Empfangselement mit der gewünschte Länge hergestellt werden kann.

Weitere vorteilhafte Ausführungsformen der Erfindung sind in den Unteransprüchen angegeben.

Diffraktive bzw. refraktive optische Elemente können grundsätzlich beispielsweise auf folgende Weise erzeugt werden. In einer insbesondere aus Kunststoff bestehenden Basisfolie oder -platte werden zunächst parallel zueinander verlaufende, insbesondere unmittelbar nebeneinanderliegende, streifenförmige Zylinderlinsen, insbesondere Fresnel-Zylinderlinsen gebildet.

Die für die Linsen erforderlichen linienförmigen Ausnehmungen können beispielsweise dadurch erzeugt werden, daß über die Oberfläche der Basisfolie bzw. der Basisplatte ein Laserstrahl mit insbesondere dreieckigem oder rautenförmigem Querschnitt entlang paralleler Linien geführt wird, so daß das Material der Basisfolien bzw. -platte an der Oberfläche entlang der Führungslinien geschmolzen wird und verdampft. An Stellen größeren Querschnitts des Laserstrahls wirkt während des Überstreichens mehr Energie auf das Material ein, so daß an diesen Stellen mehr Material geschmolzen wird und dadurch die entstehenden Ausnehmungen eine größere Tiefe besitzen. Somit kann auf diese Weise eine Vielzahl von parallelen, rillenförmigen Ausnehmungen gebildet werden, die senkrecht zur Oberfläche der Basisfolie bzw. -platte einen im wesentlichen dreieckige Querschnitt besitzen.

Von den auf diese oder andere Weise erzeugten Basisfolien bzw. -platten mit streifenförmigen optischen Elementen werden dann zum einen eine Vielzahl von ersten Abschnitten beliebiger Länge, die jeweils aus einem einzelnen streifenförmigen Element bestehen, und zum anderen in einer Richtung senkrecht zu den Längsachsen der streifenförmigen optischen Elemente streifenförmige zweite Abschnitte, deren Breite im wesentlichen gleich der Breite der streifenförmigen optischen Elemente ist, abgetrennt, beispielsweise abgeschnitten. Je ein erster und ein zweiter Abschnitt werden anschließend aufeinandergelegt und insbesondere miteinander fixiert, so daß die Längsachsen der rillenförmigen Ausnehmungen des ersten und zweiten Abschnittes jeweils senkrecht übereinander liegen, wodurch eine Vielzahl von nebeneinanderliegenden Sammellinsen erzeugt werden.

Auf diese Weise sind praktisch endlose Streifen bzw. Streifen von bestimmter Länge mit einer Vielzahl von hintereinanderliegenden optischen Elementen herstellbar. Typische Dicken der verwendeten Basisfolien bzw. -platten können zwischen 50 und 300 µm, insbesondere um ca. 175 µm liegen. Die Tiefe der erzeugten rillenförmigen Ausnehmungen können beispielsweise zwischen 3 und 50 µm, insbesondere um 10 µm betragen. Die beschriebenen Streifen können in einer optischen Anordnung gemäß den Ansprüchen 1 bis 14 bzw. bei einem Lichtgitter gemäß Anspruch 15 sowie bei einem Verfahren gemäß Anspruch 16 verwendet werden. Sie können jedoch auch unabhängig davon bei anderen Anwendungen eingesetzt werden.

Die Erfindung wird nachfolgend anhand eines Ausführungsbeispiels unter Bezugnahme auf die Zeichnungen näher beschrieben; in diesen zeigen:
- Fig. 1: einen schematischen Querschnitt durch ein erfindungsgemäß ausgebildetes Lichtgitter,
- Fig. 2: eine schematische Draufsicht auf eine erfindungsgemäß ausgebildete Frontabdeckung,
- Fig. 3: einen Querschnitt durch eine Sendeleiste eines erfindungsgemäß ausgebildeten Lichtgitters,
- Fig. 4: eine perspektivische Darstellung einer weiteren Ausführungsform der Erfindung,
- Fig. 5: eine schematische Darstellung einer Vorrichtung zur erfindungsgemäßen Herstellung einer flexiblen Frontabdeckung mit diffraktiven/refraktiven optischen Elementen und
- Fig. 6: eine schematische Darstellung einer Vorrichtung zur erfindungsgemäßen Herstellung einer erfindungsgemäß ausgebildeten flexiblen Leiterplatte.

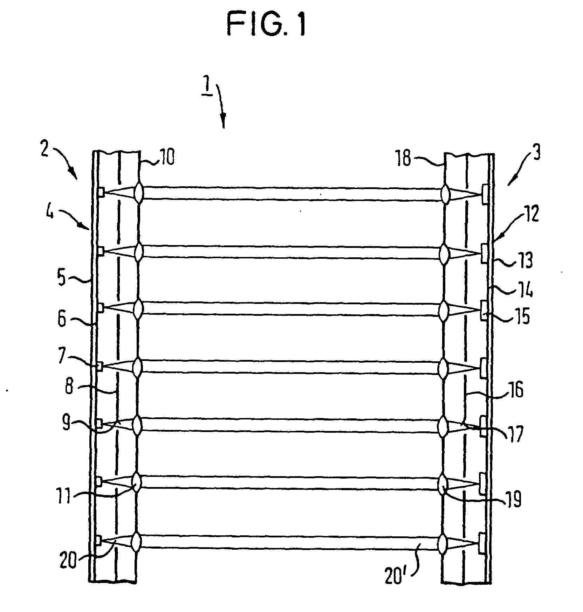

In Fig. 1 ist ein Lichtgitter 1 dargestellt, das eine Sendeleiste 2 und eine Empfangsleiste 3 umfaßt.

Die Sendeleiste 2 umfaßt ein leistenförmiges Gehäuse 4, von dem in dem in Fig. 1 dargestellten Längsschnitt lediglich die Gehäuserückwand 5 zu sehen ist. Im Inneren des Gehäuses 4 ist im Bereich der Gehäuserückwand 5 eine Leiterplatte 6 angeordnet, an der in äquidistanten Abständen Sendeelemente 7 befestigt und elektrisch angeschlossen sind.

In der Mitte des Gehäuses 4 ist eine Blendenplatte 8 vorgesehen, die in äquidistanten Abständen mit Blendenöffnungen 9 versehen ist, wobei die Mittenabstände zwischen benachbarten Blendenöffnungen 9 gleich der Mittenabstände zwischen benachbarten Sendeelementen 7 sind.

An der zur Gehäuserückwand 5 entgegengesetzten Seite des Gehäuses 4 ist eine transparente Frontabdeckung 10 vorgesehen, in der in äquidistanten Abständen schematisch dargestellte diffraktive/refraktive optische Elemente 11 ausgebildet sind.

Die der Sendeleiste 2 gegenüberliegend angeordnete Empfangsleiste 3 umfaßt ein leistenförmiges Gehäuse 12, von dem in dem in Fig. 1 dargestellten Längsschnitt lediglich die Gehäuserückwand 13 dargestellt ist.

Im Bereich der Gehäuserückwand 13 ist eine Leiterplatte 14 angeordnet, an der Empfangselemente 15 in äquidistanten Abständen befestigt und elektrisch angeschlossen sind.

In der Mitte des Gehäuses 12 ist eine Blendenplatte 16 angeordnet, in der in äquidistanten Abständen Blendenöffnungen 17 vorgesehen sind. Die Mittenabstände zwischen den Blendenöffnungen 17 sind im wesentlichen identisch zu den Mittenabständen der Empfangselemente 15.

An der der Gehäuserückwand 13 gegenüberliegenden Seite der Empfangsleiste 3 ist eine transparente Frontabdeckung 18 vorgesehen, in der in äquidistanten Abständen schematisch dargestellte diffraktive/refraktive optische Elemente 19 ausgebildet sind.

Die Sendeelemente 7 erzeugen Lichtstrahlen 20, die durch die Blendenöffnungen 9 hindurch abgestrahlt und über die diffraktiven/refraktiven optischen Elemente 11 der Sendeleiste 2 auf die diffraktiven/refraktiven optischen Elemente 19 der Sendeleiste 3 gebündelt werden. Von diesen werden die empfangenen Lichtstrahlen 21 durch die Blendenöffnungen 17 auf die Empfangselemente 15 projiziert.

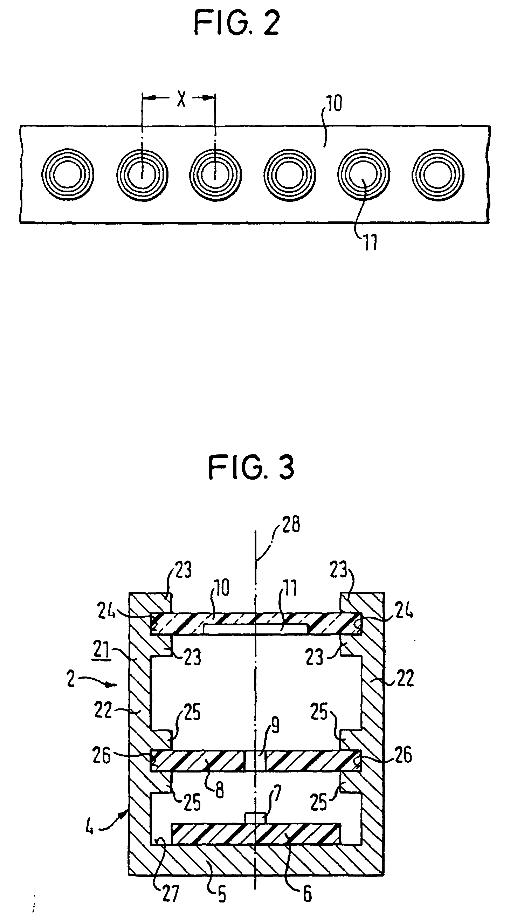

Aus Fig. 2 ist der bandförmige Aufbau der transparenten Frontabdeckung 10 zu erkennen. In der transparenten Frontabdeckung 10 sind entlang deren Längsachse hintereinanderliegend eine Vielzahl von diffraktiven/refraktiven optischen Elementen 11 ausgebildet. Dabei geben die Mittenabstände X zweier benachbart angeordneter diffraktiver/refraktiver optischer Elemente 11 die Auflösung des Lichtgitters 1 (siehe Fig. 1) an.

Aus Fig. 3 ist der Aufbau des Gehäuses 4 als U-förmige Profilschiene 21 zu erkennen. Die U-förmige Profilschiene 21 besitzt zwei Schenkel 22, die jeweils im rechten Winkel auf der die Basis der U-förmigen Profilschiene 21 bildenden Gehäuserückwand 5 stehen.

An den Innenseiten der Schenkel 22 sind im Bereich deren freien Enden als Ansätze ausgebildete Führungsleisten 23 vorgesehen, zwischen denen jeweils eine Führungsnut 24 ausgebildet ist, deren Weite in etwa der Dicke der Frontabdeckung 10 entspricht.

Die Frontabdeckung 10 ist mit ihren seitlichen Enden in den Führungsnuten 24 angeordnet und in diese beispielsweise in einer Richtung senkrecht zur Zeichnungsebene eingeschoben.

In ähnlicher Weise sind im Mittenbereich der U-förmigen Profilschiene 21 an den Innenseiten der Schenkel 22 jeweils zwei Führungsleisten 25 ausgebildet, die zwischen sich jeweils eine Führungsnut 26 ausbilden. In diese Führungsnuten 26 ist die Blendenplatte 8 so eingeschoben, daß ihre seitlichen Enden die Führungsnuten 26 im wesentlichen vollständig ausfüllen.

An der den Boden 27 der U-förmigen Profilschiene 21 bildenden Innenseite der Gehäuserückwand 5 ist die Leiterplatte 6 vorgesehen und mit dieser beispielsweise verklebt. Die Leiterplatte 6, die Blendenplatte 8 und die Frontabdeckung 10 sind dabei so in der U-förmigen Profilschiene 21 ausgerichtet, daß die Symmetrieachsen 28 der diffraktiven/refraktiven optischen Elemente 11, der Blendenöffnungen 9 und der auf der Leiterplatte 6 angeordneten Sendeelemente 7 miteinander fluchten.

Die Frontabdeckung 10 und die Blendenplatte 8 können gegen Verschieben innerhalb der Führungsnuten 24 bzw. 26 beispielsweise durch Verklebung gesichert sein. Weiterhin können an den Enden der Sendeleiste 2 Begrenzungselemente, beispielsweise in Form von Abdeckkappen vorgesehen sein, durch die eine Längsverschiebung der Frontabdeckung 10 und der Blendenplatte 8 verhindert wird. Auf diese Weise ist sichergestellt, daß die einmal zueinander justierten diffraktiven/refraktiven optischen Elemente, Blendenöffnungen und Sendeelemente im Betrieb nicht gegeneinander verschoben werden können.

Die Empfangsleiste 3 ist analog der in Fig. 3 dargestellten Sendeleiste 2 ausgebildet, wobei lediglich die Sendeelemente 7 durch entsprechende Empfangselemente 15 ersetzt sind.

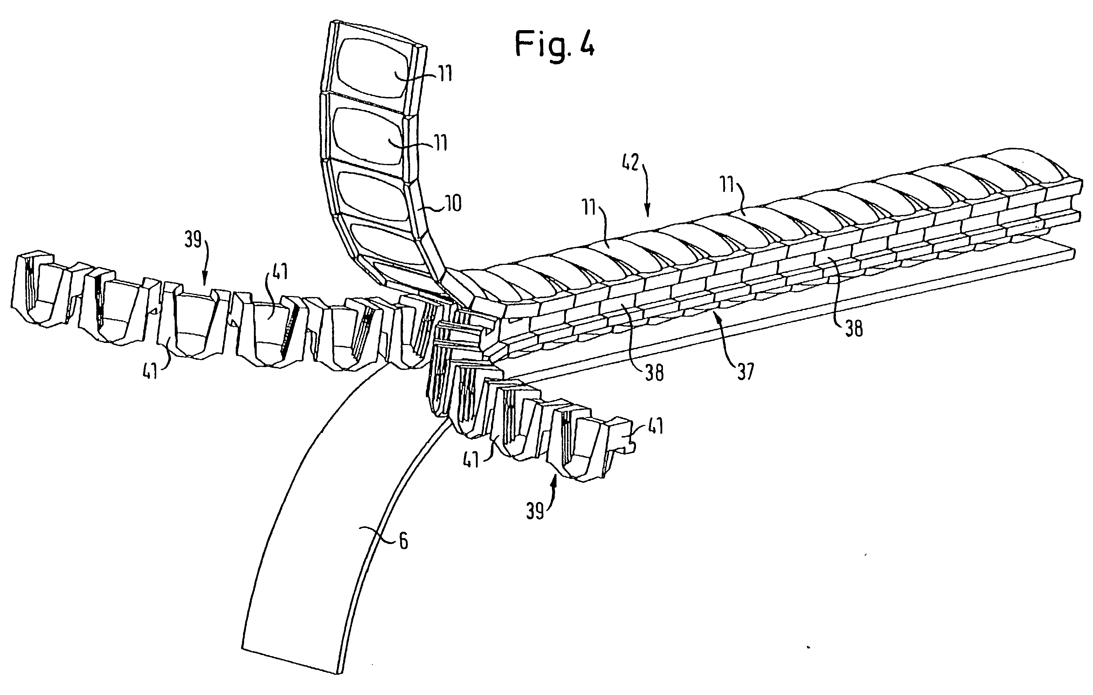

In Fig. 4 ist eine Ausführungsform einer Sendeleiste 42 dargestellt, bei der anstelle einer Blendenplatte 8 ein kettenförmiges Zwischenelement 37, das aus einer Vielzahl von Tuben 38 besteht, zwischen der Frontabdeckung 10 und der Leiterplatte 6 angeordnet ist.

Das Zwischenelement 37 ist entlang seiner Längsachse geteilt und besteht aus zwei spiegelsymmetrisch ausgebildeten Einheiten 39, die jeweils eine Aneinanderreihung von Tubenhälften 41 bilden und beispielsweise im Spritzgußverfahren hergestellt sind. Durch Zusammensetzen von Frontabdeckung 10, Einheiten 39 und Leiterplatte 6 in der in Fig. 4 angedeuteten Weise kann sehr einfach eine erfindungsgemäß ausgebildete Sendeleiste 42 beliebiger Länge erzeugt werden. Analog kann auch eine erfindungsgemäße Empfangsleiste ein Zwischenelement 37 umfassen und auf ähnliche Weise wie die Sendeleiste 42 erzeugt werden.

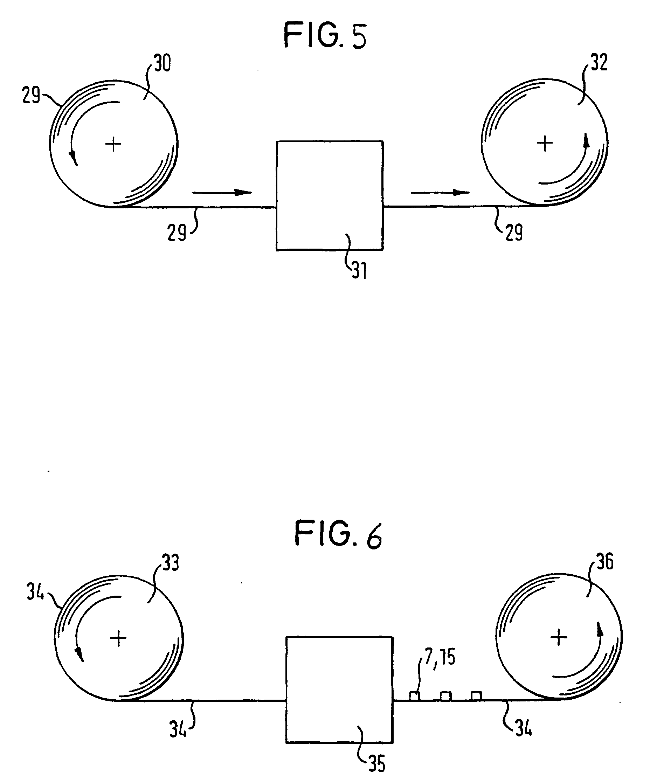

Bei der in Fig. 5 schematisch dargestellten Vorrichtung zur Erzeugung flexibler Frontabdeckungen mit integrierten diffraktiven/refraktiven optischen Elementen ist ein bandförmiges transparentes Material 29, das zur Bildung der transparenten Frontabdeckung verwendet werden soll und eine Länge besitzt, die üblicherweise ein Mehrfaches der Länge der zu erzeugenden Frontabdeckung beträgt, auf einer ersten Rolle 30 aufgewickelt. Zur Bildung der diffraktiven/refraktiven optischen Elemente wird das transparente Material 29 von der Rolle 30 abgewickelt und einer Heißprägeeinrichtung 31 zugeführt.

In dieser werden kontinuierlich diffraktive/refraktive optische Elemente in das transparente Material 29 eingeprägt und anschließend wird das zu behandelnde transparente Material 29 einer zweiten Rolle 32 zugeführt und auf dieser aufgewickelt.

Nachdem das transparente Material vollständig von der ersten Rolle 30 abgewickelt, durch die Heißprägeeinrichtung 31 mit diffraktiven/refraktiven optischen Elementen versehen und anschließend vollständig auf die zweite Rolle 32 aufgewickelt wurde, kann zur Erzeugung von Frontabdeckungen bestimmter Länge eine entsprechende Länge an transparentem Material 29 von der zweiten Rolle 32 abgewickelt und abgetrennt, beispielsweise abgeschnitten oder abgesägt werden.

Die in Fig. 6 dargestellte Vorrichtung zur erfindungsgemäßen Herstellung bestückter Leiterplatten funktioniert analog zu der nach Fig. 5 beschriebenen Vorrichtung. Auf eine erste Rolle 33 ist bandförmiges Leiterplattenmaterial 34 aufgerollt, das eine Länge besitzt, die üblicherweise ein Mehrfaches der Länge der zu erzeugenden Leiterplatten beträgt. Das Leiterplattenmaterial 34 wird kontinuierlich von der ersten Rolle 33 abgewickelt und einem Bestückungsautomat 35 zugeführt, mit dem das Leiterplattenmaterial 34 mit den Sende- bzw. Empfangselementen 7, 15 bestückt wird. Unmittelbar nach der Bestückung kann durch einen nicht dargestellten, nachgeschalteten Testautomat ein Funktionstest durchgeführt werden.

Das mit den Sende- bzw. Empfangselementen 7, 15 bestückte Leiterplattenmaterial 34 wird einer zweiten Rolle 36 zugeführt und auf dieser aufgewickelt, bis die gesamte Länge des Leiterplattenmaterials 34 mit Sende- bzw. Empfangselementen 7, 15 bestückt worden ist.

Zur Herstellung einer Leiterplatte mit einer bestimmten Länge wird ein entsprechendes Stück des bestückten Leiterplattenmaterials 34 von der zweiten Rolle 36 abgewickelt und abgetrennt.

Die gemäß der Beschreibung nach den Fig. 5 und 6 erzeugten Frontabdeckungen bzw. Leiterplatten können dann beispielsweise in eine U-förmige Profilschiene 21 gemäß Fig. 3 eingeführt und/oder mit einem Zwischenelement 37 gemäß Fig. 4 versehen werden, so daß erfindungsgemäß ausgebildete Sende- und Empfangsleisten 2, 3, 42 gebildet werden.

Die Blendenplatte 8 kann analog zu der gemäß den Fig. 5 und 6 beschriebenen Verfahren hergestellt werden. Anstelle der Heißprägeeinrichtung bzw. des Bestückungsautomats ist in diesem Fall lediglich eine Vorrichtung zur Ausbildung von Blendenöffnungen, beispielsweise eine Stanzvorrichtung vorzusehen.

Grundsätzlich müssen nicht alle auf den Leiterplatten 6, 14 vorgesehenen Bestückungsstellen mit Sende- bzw. Empfangselementen 7, 14 bestückt werden. Es kann auch beispielsweise nur jede zweite Bestückungsstelle bestückt werden, so daß durch entsprechende Einstellung des Bestückungsautomats Lichtgitter unterschiedlicher Auflösungen produziert werden können. Der Abstand der in der Frontabdeckung integrierten diffraktiven/refraktiven optischen Elemente kann dabei unverändert sein, so daß auf diese Weise nur eine Art von Frontabdeckungen zur Erzeugung von unterschiedlichen Lichtgittern bereitgehalten werden muß.

## Patentansprüche

1. Optische Anordnung mit einer Vielzahl von Licht aussendenden Sende- bzw. Empfangselementen (7, 15), einer Vielzahl von diffraktiven/refraktiven optischen Elementen (11) und einer transparenten Frontabdeckung (10), insbesondere einer Frontscheibe, wobei die diffraktiven/refraktiven optischen Elemente (11) auf einem einheitlichen, einstückig ausgebildeten Trägerelement angeordnet sind, das Trägerelement durch die Frontabdeckung (10) gebildet wird und die diffraktiven/refraktiven optischen Elemente (11) unmittelbar in der Frontabdeckung (10) ausgebildet, insbesondere in diese eingeprägt oder eingegossen sind und
die Sende- bzw. Empfangselemente (7, 15) auf einer einheitlichen, einstückig ausgebildeten Leiterplatte (6) angeordnet sind,
**dadurch gekennzeichnet,**
**dass** die Leiterplatte (6) und die Frontabdeckung (10) als aufrollbare, bandförmige, flexible Folien (29, 34) ausgebildet sind.

2. Optische Anordnung nach Anspruch 1,
**dadurch gekennzeichnet,**
**dass** die Frontabdeckung (10, 18) aus Kunststoff, beispielsweise aus Plexiglas ausgebildet ist.

3. Optische Anordnung nach einem der vorhergehenden Ansprüche,
**dadurch gekennzeichnet,**
**daß** die diffraktiven/refraktiven optischen Elemente (11, 19) als Fresnel-Linsen ausgebildet sind.

4. Optische Anordnung nach einem der vorhergehenden Ansprüche,
**dadurch gekennzeichnet,**
**daß** die Mittenabstände zweier benachbarter diffraktiver/refraktiver optischer Elemente (11, 19) im wesentlichen gleich der Mittenabstände (X) zweier benachbarter Sende- bzw. Empfangselemente (7, 15) sind.

5. Optische Anordnung nach einem der vorhergehenden Ansprüche,
**dadurch gekennzeichnet,**
**daß** zwischen der die Sende- bzw. die Empfangselemente (7, 15) tragenden Leiterplatte (6, 14) und der die diffraktiven/refraktiven optischen Elemente (11, 19) bildenden Frontplatte (10, 18) eine Vielzahl von Blendenöffnungen (9, 17) vorgesehen sind, die in einer einheitlichen, einstückig ausgebildeten Blendenplatte (8, 16) ausgebildet sind.

6. Optische Anordnung nach Anspruch 5,
**dadurch gekennzeichnet,**
**daß** die Blendenplatte (8, 16) flexibel, insbesondere als flexible Folie, ausgebildet ist.

7. Optische Anordnung nach Anspruch 5 oder 6,
**dadurch gekennzeichnet,**
**daß** die Blendenplatte (8, 16) bandförmig ausgebildet ist

8. Optische Anordnung nach einem der Ansprüche 5 bis 7,
**dadurch gekennzeichnet,**
**dass** die Mittenabstände zweier benachbarter diffraktiver/refraktiver optischer Elemente (11,19) im wesentlichen gleich der Mittenabstände (X) zweier benachbarter Blendenöffnungen (9, 17) sind und/oder daß die Größen der Blendenöffnungen (9, 17) variabel einstellbar sind.

9. Optische Anordnung nach einem der vorhergehenden Ansprüche,
**dadurch gekennzeichnet,**
**daß** die Frontabdeckung (10, 18) und die Leiterplatte (6, 14) sowie gegebenenfalls die Blendenplatte (8, 16) gegeneinander unverschiebbar angeordnet, insbesondere miteinander verbunden sind und/oder daß die Frontabdeckung (10, 18) und die Leiterplatte (6, 14) sowie gegebenenfalls die Blendenplatte (8, 16) in einem gemeinsamen, insbesondere starr ausgebildeten Gehäuse (4, 12) angeordnet sind, wobei das Gehäuse (4, 12) bevorzugt als U-förmige Profilschiene (21), insbesondere als Stranggußprofil ausgebildet ist.

10. Optische Anordnung nach Anspruch 9,
**dadurch gekennzeichnet,**
**daß** gegebenenfalls in der U-förmigen Profilschiene (21), insbesondere an den Innenseiten der Schenkel (22) der U-förmigen Profilschiene (21), Führungsabschnitte, insbesondere Führungsleisten (23), zum Einführen und Halten der Frontabdeckung (10, 18) sowie gegebenenfalls weitere Führungsabschnitte, insbesondere weitere Führungsleisten (25), zum Einführen und Halten der Blendenplatte (8, 16) ausgebildet sind, wobei die Leiterplatte (6, 14) bevorzugt am Boden (27) der U-förmigen Profilschiene (21) angeordnet und insbesondere an diesem befestigt ist.

11. Optische Anordnung nach einem der vorhergehenden Ansprüche,
**dadurch gekennzeichnet,**
**daß** die Anzahl der Sende- bzw. Empfangselemente (7, 15) kleiner oder gleich der Anzahl der diffraktiven/refraktiven optischen Elemente (19) ist und/oder daß gegebenenfalls die Anzahl der Blendenöffnungen (9, 17) kleiner oder gleich der Anzahl der diffraktiven/refraktiven optischen Elemente (11, 19) ist.

12. Optische Anordnung nach einem der vorhergehenden Ansprüche,
**dadurch gekennzeichnet,**
**daß** die Leiterplatte (6, 14) und/oder die Frontabdeckung (10, 18) und/oder gegebenenfalls die Blendenplatte (8, 16) im wesentlichen in Richtung der optischen Achsen der Sende- bzw. der Empfangselemente (7,15) und/oder in einer Richtung im wesentlichen senkrecht zu den optischen Achsen der Sende- bzw. der Empfangselemente (7,15) und/oder in beliebiger Richtung flexibel ausgebildet sind.

13. Optische Anordnung nach einem der vorherigen Ansprüche,
**dadurch gekennzeichnet,**
**daß** zwischen der die Sende- bzw. die Empfangselemente (7, 15) tragenden Leiterplatte (6, 14) und der die diffraktiven/refraktiven optischen Elemente (11, 19) bildenden Frontplatte (10, 18) eine Vielzahl von insbesondere zusammenhängenden Tuben (38) vorgesehen ist, die bevorzugt im Spritzgußverfahren hergestellt sind und/oder einstückig miteinander verbunden sind und/oder ein insbesondere flexibles Zwischenelement (37) bilden.

14. Optische Anordnung nach Anspruch 13,
**dadurch gekennzeichnet,**
**daß** das Zwischenelement (37) im wesentlichen in Richtung der optischen Achsen der Sende- bzw. der Empfangselemente (7,15) und/oder in einer Richtung im wesentlichen senkrecht zu den optischen Achsen der Sende- bzw. der Empfangselemente (7,15) und/oder in beliebiger Richtung flexibel ausgebildet ist und/oder daß das Zwischenelement (37) aus zwei in Längsrichtung getrennten Einheiten (39) besteht, insbesondere aus diesen Einheiten (39) zusammengesteckt ist, wobei insbesondere die Einheiten (39) im wesentlichen spiegelsymmetrisch zur Längsachse des Zwischenelements (37) ausgebildet sind, und/oder daß die Anzahl der Tuben (38) kleiner oder gleich der Anzahl der diffraktiven/refraktiven optischen Elemente (11, 19) ist.

15. Lichtgitter mit zumindest einer optischen Anordnung mit Sendeelementen (7) nach einem der Ansprüche 1 bis 14 sowie zumindest einer optischen Anordnung mit Empfangselementen (15) nach einem der Ansprüche 1 bis 14.

16. Verfahren zur Herstellung einer optischen Anordnung mit einer vorgegebenen Zahl von diffraktiven/refraktiven optischen Elementen (11, 19) und von Sende- oder Empfangselementen (7, 15) und einer transparenten Frontabdeckung (10), insbesondere einer Frontscheibe, wobei die diffraktiven/refraktiven optischen Elemente (11) auf einem einheitlichen, einstückig ausgebildeten Trägerelement angeordnet sind, das Trägerelement durch die Frontabdeckung (10) gebildet wird und die diffraktiven/refraktiven optischen Elemente (11) unmittelbar in der Frontabdeckung (10) ausgebildet, insbesondere in diese eingeprägt oder eingegossen sind und
die Sende- oder Empfangselemente (7, 15) auf einer einheitlichen, einstückig ausgebildeten Leiterplatte (6) angeordnet sind, nach einem der Ansprüche 1 bis 14,
**dadurch gekennzeichnet,**
**dass** zur Erzeugung der Frontabdeckung ein mit einer Anzahl von diffraktiven/refraktiven optischen Elementen (11, 19) versehener, flexibler erster Folienstreifen (29) von einer ersten Trägerrolle (32) abgerollt und ein Frontabdeckungsabschnitt abgetrennt wird, in dem die vorgegebene Zahl diffraktiver/refraktiver optischer Elemente (11, 19) ausgebildet ist,
**dass** zur Erzeugung der Leiterplatte ein mit einer Anzahl von Sende- oder Empfangselementen (7, 15) versehener, flexibler zweiter Folienstreifen (34) von einer zweiten Trägerrolle (36) abgerollt und ein Leiterplattenabschnitt abgetrennt wird, in dem die vorgegebene Zahl von Sende- oder Empfangselementen (7, 15) ausgebildet ist,
und **dass** die abgetrennten Abschnitte mittels eines Verbindungselements (21, 37) zu der optischen Anordnung zusammengesetzt werden.

## Claims

1. Optical arrangement comprising a plurality of transmitter elements (7) which transmit light and/or receiver elements (15), a plurality of diffractive/refractive optical elements (11) and a transparent front cover (10), in particular a front plate, wherein the diffractive/refractive optical elements (11) are arranged on a uniform carrier element formed in one piece; wherein the carrier element is formed by the front cover (10) and the diffractive/ refractive optical elements (11) are directly formed in the front cover (10), and are in particular pressed into the latter, or moulded into the latter; and wherein the transmitter and receiver elements (7, 15) are arranged on a uniform circuit board (6) formed in one piece,
**characterised in that**
the circuit board (6) and the front cover (10) are made as strip-like, flexible foils (29, 34) which can be rolled up.

2. Optical arrangement in accordance with claim 1, **characterised in that** the front cover (10, 18) is made of plastic, for example of plexiglass.

3. Optical arrangement in accordance with any one of the preceding claims, **characterised in that** the diffractive/refractive optical elements (11, 19) are made as Fresnel lenses.

4. Optical arrangement in accordance with any one of the preceding claims, **characterised in that** the centre-to-centre spacings of two adjacent diffractive/refractive optical elements (11, 19) are substantially the same as the centre-to-centre spacings (X) of two adjacent transmitter and receiver elements (7, 15).

5. Optical arrangement in accordance with any one of the preceding claims, **characterised in that** a plurality of diaphragm apertures (9, 17) is provided between the circuit board (6, 14) carrying the transmitter and receiver elements (7, 15) and the front plate (10, 18) forming the diffractive/refractive optical elements (11, 19), with the diaphragm apertures being formed in a uniform diaphragm plate (8, 16) made in one piece.

6. Optical arrangement in accordance with claim 5, **characterised in that** the diaphragm plate (8, 16) is flexible and is in particular made as a flexible foil.

7. Optical arrangement in accordance with claim 5 or claim 6, **characterised in that** the diaphragm plate (8, 16) is of strip-like shape.

8. Optical arrangement in accordance with any one of the claims 5 to 7, **characterised in that** the centre-to-centre spacings of two adjacent diffractive/refractive optical elements (11, 19) are substantially the same as the centre-to-centre spacings (X) of two adjacent diaphragm apertures (9, 17); and/or **in that** the sizes of the diaphragm apertures (9, 17) are variably adjustable.

9. Optical arrangement in accordance with any one of the preceding claims, **characterised in that** the front cover (10, 18) and the circuit board (6, 14) and also, optionally, the aperture plate (8, 16) are non-displaceably arranged relative to one another, and are in particular connected to one another; and/or **in that** the front cover (10, 18) and the circuit board (6, 14) and also, optionally, the diaphragm plate (8, 16) are arranged in a common housing (4, 12), which is in particular of rigid design, wherein the housing (4, 12) is preferably formed as a U-shaped rail section (21), in particular as an extruded section.

10. Optical arrangement in accordance with claim 9, **characterised in that** guide sections, in particular guide strips (23) for the introduction and holding of the front cover (10, 18) and, optionally, also further guide sections, in particular further guide strips (25) for the introduction and holding of the aperture plate (8, 16), are optionally formed in the U-shaped rail section (21), in particular at the inner sides of the limbs (22) of the U-shaped rail section (21), with the circuit board (6, 14) preferably being arranged at the base (27) of the U-shaped rail section (21) and in particular being secured to the base.

11. Optical arrangement in accordance with any one of the preceding claims, **characterised in that** the number of the transmitter and receiver elements (7, 15) is smaller than or the same as the number of the diffractive/refractive optical elements (19); and/or **in that** the number of the diaphragm apertures (9, 17) is optionally smaller than or the same as the number of the diffractive/refractive optical elements (11, 19).

12. Optical arrangement in accordance with any one of the preceding claims, **characterised in that** the circuit board (6, 14) and/or the front cover (10, 18) and/or, optionally, the diaphragm plate (8, 16) are of flexible design substantially in the direction of the optical axes of the transmitter and receiver elements (7, 15) and/or in a direction substantially perpendicular to the optical axes of the transmitter and receiver elements (7, 15) and/or in any desired direction.

13. Optical arrangement in accordance with any one of the preceding claims, **characterised in that** a plurality of tubes (38), in particular interconnected tubes, is provided between the circuit board (6, 14) carrying the transmitter and receiver elements (7, 15) and the front plate (10, 18) forming the diffractive/ refractive optical elements (11, 19), said tubes preferably being manufactured using the injection moulding method and/or being connected together in one piece and/or forming an intermediate element (37), in particular a flexible intermediate element.

14. Optical arrangement in accordance with claim 13, **characterised in that** the intermediate element (37) is of flexible design substantially in the direction of the optical axes of the transmitter and receiver elements (7, 15) and/or in a direction substantially perpendicular to the optical axes of the transmitter and receiver elements (7, 15) and/or in any desired direction; and/or **in that** the intermediate element (37) comprises two units (39) separate in the longitudinal direction and is in particular plugged together from these units (39), wherein the units (39) are in particular made substantially with mirror symmetry relative to the longitudinal axis of the intermediate element (37); and/or **in that** the number of tubes (38) is smaller than or the same as the number of the diffractive/refractive optical elements (11, 19).

15. Light grid, having at least one optical arrangement with transmitter elements (7) in accordance with any one of the claims 1 to 14 and also at least one optical arrangement with receiver elements (15) in accordance with any one of the claims 1 to 14.

16. Method of manufacturing an optical arrangement with a predetermined number of diffractive/refractive optical elements (11, 19) and of transmitter or receiver elements (7, 15) and a transparent front cover (10), in particular a front plate, wherein the diffractive/refractive optical elements (11) are arranged on a uniform carrier element formed in one piece; wherein the carrier element is formed by the front cover (10) and the diffractive/refractive optical elements (11) are directly formed in the front cover (10), and are in particular pressed into the latter, or moulded into the latter, and in that the transmitter or receiver elements (7, 15) are arranged on a uniform circuit board (6) formed in one piece, in accordance with any one of the claims 1 to 14,
**characterised in that**, to produce the front cover, a flexible first strip of foil provided with a number of diffractive/refractive optical elements (11, 19) is unwound from a first carrier reel (32) and a front cover section is cut off in which the predetermined number of diffractive/refractive optical elements (11, 19) is formed;
**in that**, to produce the circuit board, a flexible second strip of foil (34 provided with a number of transmitter or receiver elements (7, 15) is unwound from a second carrier reel (36) and a circuit board section is cut off in which the predetermined number of transmitter or receiver elements (7, 15) is formed;
and **in that** the sections cut off are put together to form the optical arrangement by means of a connection element (21, 37).

## Revendications

1. Dispositif optique comportant une pluralité d'éléments émetteurs ou récepteurs de lumière (7, 15), une pluralité d'éléments optiques de diffraction / réfraction (11) et un recouvrement frontal (10) transparent, notamment une vitre frontale, les éléments optiques de diffraction / réfraction (11) étant disposés sur un élément de support homogène réalisé d'un seul tenant, l'élément de support étant constitué du recouvrement frontal (10), et les éléments optiques de diffraction / réfraction (11) étant agencés directement dans le recouvrement frontal (10), notamment incrustés ou scellés dans celui-ci, et
les éléments émetteurs ou récepteurs (7, 15) étant disposés sur une carte de circuits imprimés (6) homogène réalisée d'un seul tenant,
**caractérisé en ce que**
la carte de circuits imprimés (6) et le recouvrement frontal (10) sont réalisés en tant que films flexibles (29, 34) en forme de bande pouvant être enroulés.

2. Dispositif optique selon la revendication 1,
**caractérisé en ce que**
le recouvrement frontal (10, 18) est réalisé en matière plastique, par exemple en plexiglas.

3. Dispositif optique selon l'une des revendications précédentes,
**caractérisé en ce que**
les éléments optiques de diffraction / réfraction (11, 19) sont réalisés sous la forme de lentilles de Fresnel.

4. Dispositif optique selon l'une des revendications précédentes,
**caractérisé en ce que**
les écartements médians entre deux éléments optiques de diffraction / réfraction (11, 19) adjacents sont sensiblement identiques aux écartements médians (X) entre deux éléments émetteurs ou récepteurs (7, 15) adjacents.

5. Dispositif optique selon l'une des revendications précédentes,
**caractérisé en ce que**,
entre la carte de circuits imprimés (6, 14) portant les éléments émetteurs ou récepteurs (7, 15) et le panneau frontal (10, 18) formant les éléments optiques de diffraction / réfraction (11, 19), il est prévu une pluralité d'orifices à diaphragme (9, 17) qui sont pratiqués dans une plaque à diaphragme (8, 16) homogène réalisée d'un seul tenant.

6. Dispositif optique selon la revendication 5,
**caractérisé en ce que**
la plaque à diaphragme (8, 16) est réalisée de façon flexible, notamment sous la forme d'un film flexible.

7. Dispositif optique selon la revendication 5 ou 6,
**caractérisé en ce que**
la plaque à diaphragme (8, 16) est réalisée en forme de bande.

8. Dispositif optique selon l'une des revendications 5 à 7,
**caractérisé en ce que**
les écartements médians entre deux éléments optiques de diffraction / réfraction (11, 19) adjacents sont sensiblement identiques aux écartements médians (X) entre deux orifices à diaphragme (9, 17), et/ou **en ce que** les dimensions des orifices à diaphragme (9, 17) sont réglables de façon variable.

9. Dispositif optique selon l'une des revendications précédentes,
**caractérisé en ce que**
le recouvrement frontal (10, 18) et la carte de circuits imprimés (6, 14), ainsi que le cas échéant la plaque à diaphragme (8, 16), sont disposés en fixe les uns par rapport aux autres, notamment reliés entre eux, et/ou **en ce que** le recouvrement frontal (10, 18) et la carte de circuits imprimés (6, 14), ainsi que le cas échéant la plaque à diaphragme (8, 16), sont disposés dans un boîtier (4, 12) commun, qui est notamment agencé de façon rigide, le boîtier (4, 12) étant de préférence agencé en tant que rail profilé (21) en forme de U, notamment en tant que profilé de coulée continue.

10. Dispositif optique selon la revendication 9,
**caractérisé en ce que**
des tronçons de guidage, notamment des barrettes de guidage (23), pour l'insertion et la retenue du recouvrement frontal (10, 18), ainsi que le cas échéant d'autres tronçons de guidage, notamment d'autres barrettes de guidage (25), pour l'insertion et la retenue de la plaque à diaphragme (8, 16), sont le cas échéant agencés dans le rail profilé (21) en forme de U, notamment sur les faces intérieures des branches (22) du rail profilé (21) en forme de U, la carte de circuits imprimés (6, 14) étant de préférence disposée sur le fond (27) du rail profilé (21) en forme de U, et étant notamment fixée sur celui-ci.

11. Dispositif optique selon l'une des revendications précédentes,
**caractérisé en ce que**
le nombre d'éléments émetteurs ou récepteurs (7, 15) est inférieur ou égal au nombre d'éléments optiques de diffraction / réfraction (19), et/ou **en ce que** le nombre d'orifices à diaphragme (9, 17) est le cas échéant inférieur ou égal au nombre d'éléments optiques de diffraction / réfraction (11, 19).

12. Dispositif optique selon l'une des revendications précédentes,
**caractérisé en ce que**
la carte de circuits imprimés (6, 14) et/ou le recouvrement frontal (10, 18), et/ou le cas échéant la plaque à diaphragme (8, 16), sont pour l'essentiel agencés de façon flexible en direction des axes optiques des éléments émetteurs ou récepteurs (7, 15), et/ou dans une direction sensiblement perpendiculaire aux axes optiques des éléments émetteurs ou récepteurs (7, 15) et/ou dans une direction quelconque.

13. Dispositif optique selon l'une des revendications précédentes,
**caractérisé en ce que**,
entre la carte de circuits imprimés (6, 14) portant les éléments émetteurs ou récepteurs (7, 15) et la plaque frontale (10, 18) formant les éléments optiques de diffraction / réfraction (11, 19), il est prévu une pluralité de tubes (38) notamment adhérents les uns aux autres, qui sont de préférence fabriqués par un procédé de moulage par injection, et/ou sont reliés d'un seul tenant entre eux et/ou forment un élément intermédiaire (37), notamment flexible.

14. Dispositif optique selon la revendication 13,
**caractérisé en ce que**
l'élément intermédiaire (37) est pour l'essentiel réalisé de façon flexible en direction des axes optiques des éléments émetteurs ou récepteurs (7, 15), et/ou dans une direction sensiblement perpendiculaire aux axes optiques des éléments émetteurs ou récepteurs (7, 15) et/ou dans une direction quelconque, et/ou **en ce que** l'élément intermédiaire (37) est constitué de deux unités (39) séparées dans la direction longitudinale, et est notamment assemblé à partir de ces unités (39), les unités (39) étant notamment agencées pour l'essentiel symétriquement par rapport à l'axe longitudinal de l'élément intermédiaire (37), et/ou **en ce que** le nombre de tubes (38) est inférieur ou égal au nombre d'éléments optiques de diffraction / réfraction (11, 19).

15. Réseau optique comportant au moins un dispositif optique avec des éléments émetteurs (7) selon l'une des revendications 1 à 14, ainsi qu'au moins un dispositif optique avec des éléments récepteurs (15) selon l'une des revendications 1 à 14.

16. Procédé destiné à la fabrication d'un dispositif optique comportant un nombre prédéterminé d'éléments optiques de diffraction / réfraction (11, 19) et d'éléments émetteurs ou récepteurs (7, 15) et un recouvrement frontal (10) transparent, notamment une vitre frontale, les éléments optiques de diffraction / réfraction (11) étant disposés sur un élément de support homogène réalisé d'un seul tenant, l'élément de support étant constitué du recouvrement frontal (10), et les éléments optiques de diffraction / réfraction (11) étant agencés directement dans le recouvrement frontal (10), notamment incrustés ou scellés dans celui-ci, et
les éléments émetteurs ou récepteurs (7, 15) étant disposés sur une carte de circuits imprimés (6) homogène réalisée d'un seul tenant, selon l'une des revendications 1 à 14
**caractérisé en ce que**,
pour la réalisation du recouvrement frontal, une première bande de film (29) flexible munie d'un nombre d'éléments optiques de diffraction / réfraction (11, 19) est déroulée d'un premier rouleau de support (32), duquel est séparé un tronçon de recouvrement frontal dans lequel est formé le nombre prédéterminé d'éléments optiques de diffraction / réfraction (11, 19),
**en ce que** pour la réalisation de la carte de circuits imprimés, une deuxième bande de film (34) flexible munie d'un certain nombre d'éléments émetteurs ou récepteurs (7, 15) est déroulée d'un deuxième rouleau de support (36), duquel est séparé un tronçon de carte de circuits imprimés dans lequel est formé le nombre prédéterminé d'éléments émetteurs ou récepteurs (7, 15), et
**en ce que** les tronçons séparés sont assemblés au sein du dispositif optique au moyen d'un élément de liaison (21, 37).
